# EUROPEAN PATENT APPLICATION

(11) **EP 0 902 260 A2**
(43) Date of publication of application: **17.03.1999**
(21) Application number: 98202741.9
(22) Date of filing: 17.08.1998
(51) Int. Cl.: G01D 11/28

(54) **Illuminated instrument cluster**

(30) Priority: 12.09.1997 US 928351
(71) Applicant: DELCO ELECTRONICS CORPORATION, Kokomo Indiana 46902 (US)
(72) Inventor: Perry, Kenneth David, New Lothrop, Michigan 48460 (US); Fuller, Joseph Harold, Clio, Michigan 48420 (US)
(74) Representative: Denton, Michael John

(57) **Abstract**

An instrument cluster light pipe is edge lighted, and graphics characters and symbols are embossed into the rear surface of the light pipe and filled or coated with reflective material so that the graphics are brightly illuminated. A background sheet or film behind the light pipe is illuminated by ambient daylight or by some stray light from the light pipe. The display appearance will be that of the bright graphics against a background of a color determined by light reflected from the background element. Where the light is not reflected due to absorption by the background element, the bright graphics will appear to be floating in a dark space.

## Description

### Technical Field

This invention relates to an illuminated instrument cluster for automotive vehicles.

### Background of the Invention

Vehicle instrument clusters are generally designed for easy viewing by the operator as well as for economy of manufacture. It is very important, however to incorporate aesthetically pleasing features so that vehicle manufacturers can present attractive products to their customers. To this end it is known to use light conducting sheets as light pipes to transmit light from discrete lamps to the entire region of the display. Typically the light pipe is positioned behind a translucent display graphic; in one form the graphic is an appliqué on the front face of the light pipe itself. Then during daylight, ambient light can illuminate the appliqué from the front and at night the lamps are turned on to illuminate the appliqué from the rear. The appliqué consists of not only the essential graphics symbols and characters but also the surrounding background color or pattern which will be illuminated by daylight and at night.

To afford flexibility in design (i.e., to obtain various display appearances) it is desirable to divorce the graphics from the background so that they may be illuminated differently. Then, for example, it would be possible to have a colored or textured background appearance in daylight and a dark background at night, so that the graphics appear to float in space. Alternatively, the background could be visible to some degree at night in accordance with the design objectives.

### Summary of the Invention

The object of the present invention is to selectively illuminate display graphics and a background for flexible design purposes. Another object is to obtain dramatic differences in daylight and night appearances of such display graphics with inexpensive technology.

To carry out the invention an instrument cluster containing gauge pointers has an edge lighted light pipe comprising a sheet of transparent material behind the pointers, graphics characters and symbols embedded in the rear face of the light pipe and containing reflective material, and a sheet of colored background material behind the light pipe. Alternatively the background element may be a film or coating applied directly over the light pipe but configured to extract a minimal amount of light from the light pipe.

In daylight, incident light reflects from the graphics and from the background sheet so that both are visible. If the reflective material is white, the graphics will appear to be white against the background color. The background sheet may be textured or patterned to give a desired appearance to the display. At night, the graphics are illuminated by light passing from edge-mounted lamps through the light pipe. Some stray light from the light pipe will illuminate the background element. If the background element is light or of the same color as the lamps, sufficient light is reflected from the background element to be visible, yielding the appearance of bright graphics against a dim background. If the background element color is dark or absorbs the stray light, the display background will appear to be black so that the bright graphics seem to be floating in space.

An illuminated instrument cluster in accordance with the present invention is characterized by the features specified in Claim 1.

### Brief Description of the Drawings

The present invention will now be described, by way of example, with reference to the accompanying drawings, in which:-
Figure 1 is a cross section of an instrument cluster having display illumination according to the invention;
Figure 2 is a front view of a portion of the display of Figure 1;
Figures 3A and 3B are cross sections of a portion of the light pipe taken along line 3-3 of Figure 2 showing a graphic site for two different embodiments of the invention;
Figures 4-7 are cross sections of the light pipe and background element of the Figure 1 cluster illustrating various lighting effects of the display.

In the ensuing description, the terms "background element" and "background sheet" refer to the physical light reflector adjacent the light pipe and the term "background" refers to the appearance of the sheet or element in the visible display.

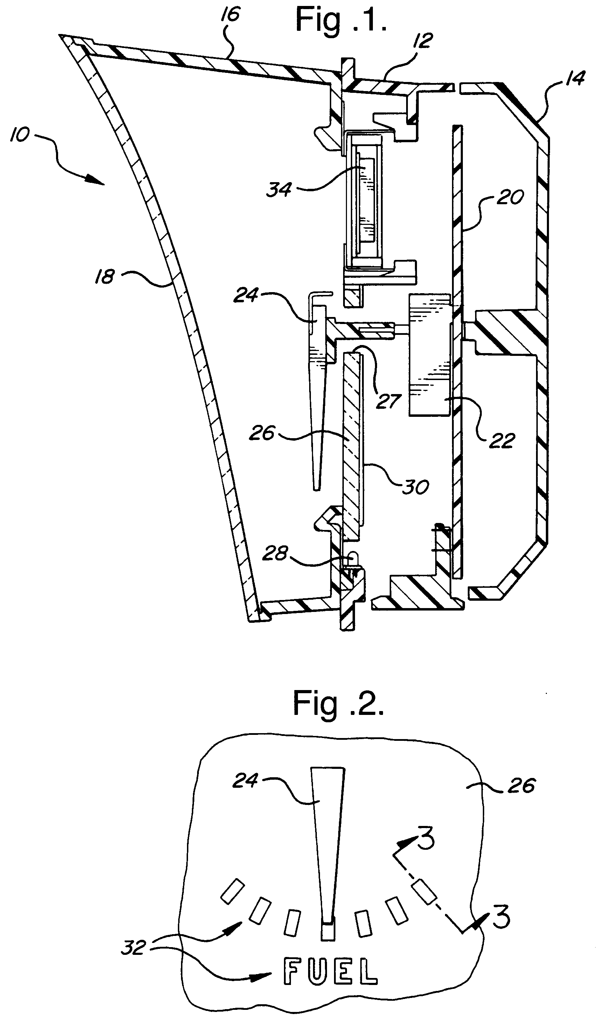

Referring to Figure 1, an instrument cluster 10 has a housing comprising a center section 12, a rear cover 14 at the back of the center section and a front shroud 16 which includes a transparent lens 18 extending over the front of the center section. The center section supports a circuit board 20 carrying at least one gauge 22 which has a pointer 24. A light pipe 26 in the form of a sheet of acrylic material or the like is mounted in front of the gauge 22 and behind its pointer 24; an aperture 27 in the light pipe accommodates the pointer shaft. An array of lamps 28, preferably light emitting diodes (LEDs) along the edge of the light pipe illuminates the interior of the light pipe. A background element in the form of a separate sheet 30 lies adjacent to the rear face of the light pipe 26. Graphics 32 in the form of symbols and characters are applied to the light pipe 26 for display along with the pointer 24 as shown in Figure 2. An odometer or other numeric display device 34 is mounted adjacent the light pipe or in an aperture in the light pipe to display data in the same plane as the light pipe.

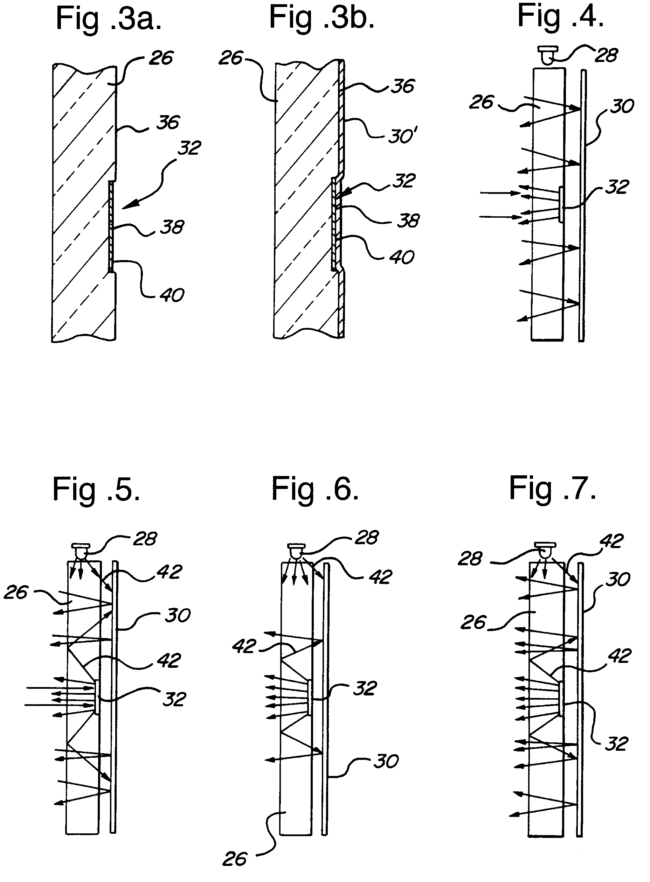

As is well known, the operation of light pipes depends on the nearly total internal reflection of the injected light so that it travels throughout the transparent sheet by reflecting alternately from its front and rear surfaces. A small portion of the light escapes through the surfaces so that some illumination of the background element occurs. To achieve bright light emission from the light pipe the surface must be altered to frustrate the internal reflection and allow light escape. Here, the graphics 32 are embedded in the rear face 36 of the light pipe 26 as shown in Figure 3. Preferably a depression 38 is formed in the rear face 36 and filled with a white ink 40 or other reflective material. Methods of forming the graphics include laser etching the depression 38 and then filling with ink, or hot stamping with a hot stamp tape to simultaneously emboss the rear surface 36 and apply the tape material, for example. In either case the smooth surface 36 is locally roughened or the ink or other reflective material will be intimately bonded with the light pipe so that the light in the light pipe is incident on the graphic and diffusely reflected forwardly out of the light pipe.

The background sheet 30 is of any desired material such as metal or plastic and is colored according to the desired appearance of the display. The background sheet may also be textured or patterned to enhance the background appearance. Although a separate sheet is preferred, the background element may be a film 30' secured to or painted on the rear face as shown in Figure 3B. This may be effective if the film does not absorb too much light from the light pipe or interfere with the internal reflection of the light. In either case the appearance depends on the color of the background element and the color of the incident light.

Figures 4-7 show the effects of different conditions; for clarity the figures show the background sheet 30 substantially spaced from the light pipe but in practice the sheet may lie in contact with the light pipe. Also in each figure, the graphics will be brighter than the background to afford easy legibility. Generally, in daylight the background will be the same color as the background element unless the color is so dark that it appears to be black. As shown in Figure 4, the lamps 28 are not lit and ambient light affords the only illumination which passes transversely through the light pipe to illuminate both the background element 30 and the graphic 32. The graphic ink preferably is white or other good reflector so that the graphics will be bright. If desired, as shown in Figure 5, the lamps may be operated during daylight to further enhance the graphics appearance but will have little if any effect on the background appearance. The stray light from the light pipe toward the background is depicted in Figures 5-7 as an array of slanted arrows 42.

At night, the only illumination is from the lamps 28. Where, as in Figure 6, the background element 30 does not reflect stray light 42 from the light pipe, the only light emitted is from the graphics 32 so that they appear to be suspended in space. This occurs with white light illumination when the background element is a dark color. It also occurs when the light and the background element are different colors, e.g., the light source is a red LED and the background is blue. The red light will be absorbed and not reflected yielding red graphics floating in a black background. Another night illumination condition is represented in Figure 7. There the background element is colored to reflect the stray light and the background will then be visible in the display output, and will have the color of the lamps 28 or, if the lamps are white, it will be the color of the background element.

It will thus be seen that the graphics and background illumination arrangement is very flexible in terms of resulting display appearance while using the same structure. Remarkably different effects are obtained by the selection of colors in the background and in the lamps. It is also possible to use two sets of lamps of different colors to obtain different results between day ad night. To obtain these advantages, a relatively simple and inexpensive illumination arrangement is required.

## Claims

1. An automotive instrument cluster (10) having a three dimensional appearance comprising:
at least one gauge (22) driving a pointer (24);
a transparent light pipe (26) disposed between the pointer (24) and the gauge (22), the light pipe (26) having an edge, a front surface facing said pointer (24) and a rear surface facing said gauge (22);
a light source (28) for edge lighting the light pipe (26);
graphics (32) embossed into the rear face of the light pipe (26) comprising reflective material (40) disposed in a pattern to define symbols and characters; and
a background element (30) adjacent the rear face of the light pipe (26) for illumination primarily by ambient light passing transversely through the light pipe (26) to afford a background appearance during daylight illumination.

2. An instrument cluster as defined in claim 1 wherein the graphics (32) comprise an indentation (38) formed in the rear face of the light pipe (26) filled with an ink (40).

3. An instrument cluster as defined in claim 1 wherein the graphics (32) comprise an indentation (38) formed in the rear face of the light pipe (26) filled with a hot stamp tape material (40).

4. An instrument cluster as defined in claim 1 wherein the light source (28) comprises a plurality of light emitting diodes along the edge of the light pipe (26).

5. An instrument cluster as defined in claim 1 wherein the background element (30) is a sheet separate from the light pipe (26) for minimal illumination by the light pipe (26).

6. An instrument cluster as defined in claim 5 wherein the background sheet (30) is textured to provide a background pattern.

7. An instrument cluster as defined in claim 1 wherein:
the background element (30) is partially illuminated by the light pipe (26); and
the background element (30) is colored to reflect light from the light pipe (26) to provide a background pattern in the absence of ambient light.

8. An instrument cluster as defined in claim 1 wherein:
the background element (30) is partially illuminated by the light pipe (26); and
the background element (30) is colored to absorb light from the light pipe (26) to provide a dark background in the absence of ambient light to afford a floating appearance of the graphics (32).
